# EUROPÄISCHE PATENTSCHRIFT

(11) **EP 2 027 176 B1**
(45) Veröffentlichungstag und Bekanntmachung des Hinweises auf die Patenterteilung: **06.03.2013**
(21) Anmeldenummer: 07724139.6
(22) Anmeldetag: 11.04.2007
(51) Int. Cl.: C08G 59/50, C08J 3/03, C08L 61/06, C08L 63/00, C08J 5/24, C08L 61/14, C08G 14/06

(54) **HARZDISPERSION**
RESIN DISPERSION
DISPERSION DE RÉSINE

(30) Priorität: 13.04.2006 DE 102006017891
(43) Veröffentlichungstag der Anmeldung: 25.02.2009
(73) Patentinhaber: Momentive Specialty Chemicals GmbH, 58642 Iserlohn-Letmathe (DE)
(72) Erfinder: ROMAHN, Carsten, 58640 Iserlohn (DE); SCHWAB, Michael, 58640 Iserlhn (DE); KUHLMANN, Gunda, 59077 Hamm (DE); STRACKE, Peter, 58642 Iserlohn (DE)
(86) Internationale Anmeldenummer: PCT/EP2007/003198
(87) Internationale Veröffentlichungsnummer: WO 2007/118645

(56) Entgegenhaltungen:
- EP-A- 0 458 739
- EP-A- 1 046 683
- EP-A- 1 247 844
- EP-A1- 0 019 161
- EP-A1- 0 178 414
- DE-A1- 2 323 936
- DE-A1- 10 252 552

## Beschreibung

Die Erfindung betrifft eine wässrige Harzdispersion, ein Verfahren zu deren Herstellung und Verwendung.

Für die Herstellung von Imprägnierungen von Bauteilen werden Harzdispersionen verwendet, die bisher in der Regel aus wässrigen Resolen oder Acrylatdispersionen bestehen. So sind Dispersionen auf der Basis von Resolen mit Wasser verdünnbar, allerdings spalten diese beim Härten Formaldehyd ab, wodurch eine Fertigung nur in speziell dafür ausgelegten Anlagen durchgeführt werden kann. Acrylatdispersionen können ohne Emission von umweltschädlichen Substanzen gehärtet werden, jedoch weisen die gehärteten Produkte ei ne geringe Glasübergangstemperatur und ein ungünstiges Brandverhalten auf

Harze auf der Basis von Benzoxazinen sind aus dem Stand der Technik bekannt. So wird beispielsweise in der DE 23 23936 beschrieben, dass entsprechende Verbindungen durch Umsetzung von Phenolen mit primären Aminen und Formaldehyd erhältlich sind, wobei entweder die Phenole mindestens zwei hydroxylsubstituierte aromatische Ringsysteme pro Molekül oder die Amine mindestens zwei primäre Aminogruppen pro Molekül besitzen. Solche Harze, haben insbesondere den Vorteil, dass sie ohne Zugabe von weiteren Härtungsmitteln vernetzbar sind, was den Vorteil mit sich bringt, dass umweltschädliche Abspaltungsprodukte vermieden werden, die entweichen können. Besteht allerdings die Absicht Beschichtungen mittels Harzdispersionen auf der Basis von Benzoxazinen vorzunehmen, ist wiederum ein Lösungsmittel erforderlich, was zu Emissionsproblemen führt.

Die EP 1247 844 A2 offenbart ein Beschichtungsmaterial, was ein N-substituierten Benzoxazinring und ein S-modifizierko Epoxidharz aufweist. Die EP 0178414 A1 beschreibt Mischungen aus Benzoxazinen und Cycloaliphatischen Epoxidharzen.

Die Aufgabe der hier vorliegenden Erfindung besteht darin, Harzdispersionen bereitzustellen, bei deren Verarbeitung die Freisetzung von umweltbelastenden Stoffen vermieden wird und gleichzeitig Produkte entstehen, die eine hohe Glasübergangstemperatur besitzen.

Gelöst wird diese Aufgabe erfindungsgemäß durch eine wässerige Harzdispersion nach Anspruch 1.

Der Bestandteil (I) 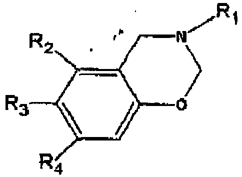 kann wie eingangs bereits erwähnt, durch Umsetzung von Phenolen mit primären Aminen und Formaldehyd erhalten werden, wobei entweder die Phenole mindestens zwei hydroxylsubstituierte aromatische Ringsysteme pro Molekül oder die Amine mindestens zwei primäre Aminogruppen pro Molekül besitzen.
R₁ kann aufgrund der hohen Stabilität ein unsubstituierter ein- oder mehrkerniger aromatischer Rest oder mit Aminogruppen und/oder Cyanogruppen und/oder Nitrilgruppen und/oder mit gesättigten und/oder ungesättigten aliphatischen C₂ bis C₁₂ -Kohlenstoffketten substituierter ein- oder mehrkerniger aromatischer Rest sein. Bevorzugt ist R₁ ein unsubstituierter Phenylrest, da entsprechende Verbindungen thermisch stabil und preiswert sind.

R₂, R₃ und R₄ sind Wasserstoff oder Alkylreste mit bis zu 15 C-Atomen oder aromatischer Rest, wobei R₂, R₃ und R₄ gleich oder verschieden von einander sein können.
Alkylreste mit 8 bis 15 C-Atomen sind bevorzugt, da sie dem Material eine hohe Flexibilität verleihen. Verbindungen mit Alkylresten > 10 C-Atomen besitzen eine geringere Toxizität und sind daher zusätzlich von Vorteil.

Aufgrund der einfachen Verfügbarkeit der Rohstoffe, ist es besonders bevorzugt, wenn der Bestandteil (I) ein Reaktionsprodukt aus Bisphenol A, Anilin und Formaldehyd ist.

Als Bestandteil (II) wird ein Codispersionsmittel auf der Basis von Epoxidharzen und/oder Novolakharzen eingesetzt. Codispersionsmittel können im Netzwerk im wesentlichen emissionsfrei eingebaut werden und/oder zum Netzwerkaufbau beitragen. Als Epoxidharz wird bevorzugt ein niedermolekulares Epoxidharz mit mittlerer Molmasse von 200 bis 1000 verwendet.

Bevorzugt können als Epoxidharze alle Epoxidverbindungen mit mindestens zwei Epoxidgruppen pro Molekül eingesetzt werden, deren Schmelzbereich unter 85°C liegt. Bevorzugt sind Epoxidverbindungen, die bei Raumtemperatur flüssig sind, wie Diglycidylether von Bisphenolen oder vorverlängerte Harze auf Basis von Bisphenol-A-Diglycidylethern. Insbesondere bevorzugt sind niedrigviskose Harze wie Epoxidharze auf Basis von Cycloolefinen oder Tetraglycidyldianilin oder aber auch Mischungen fester Epoxidharze wie z.B. epoxidierter Novolake mit sogenannten Reaktivverdünnern. Die Epoxidharze können gegebenenfalls mit anderen Polymeren wie z.B. Polyestern, Acrylaten, Siliconpolymeren oder Polyvinylderivaten modifiziert sein.

Als Novolake kommen im sauren Milieu hergestellte Copolymerisate von phenolischen Verbindungen und einem Aldehyd zum Einsatz, bei deren Herstellung das Verhältnis von phenolischer Verbindung : Aldehyd bevorzugt von 1 : 0,4 bis 1: 0,8 beträgt.
Diese Copolymerisate lassen sich monomerfrei herstellen. Bei einem Verhältnis größer 1:0,8 ist der entstandene Novolak zu hochviskos und kleiner 1: 0,4 sind die Harze zu wasserlöslich und somit schlechter zu dispergieren.

Als phenolische Verbindungen können ein oder mehrkernige Phenole oder Gemische der genannten Verbindungsklasse eingesetzt werden und zwar sowohl ein- oder mehrkernige Phenole. Beispiele hierfür sind das Phenol selbst als bevorzugte Variante, sowie dessen alkylsubstituierte Homologe, wie o-, m- oder p-Kresol, Xylole oder höher alkylierte Phenole, außerdem halogensubstituierte Phenole, wie Chlor-, Bromphenol und mehrwertige Phenole wie Resorcin oder Brenzkatechin, sowie mehrkernige Phenole wie Naphthole, Bisphenol A oder Bisphenol F.
Das Phenol bzw. die phenolische Komponente wird mit Aldehyd, insbesondere Formaldehyd oder einer Formaldehyd abspaltenden Verbindung zu dem gewünschten Novolak umgesetzt. Die Novolake können durch übliche Modifizierungsmittel, wie z.B. Epoxidharze, Kautschuke, Polyvinylbutyral und anorganische Zusätze modifiziert sein.

Besonders bevorzugt ist, wenn die Menge an Codispersionsmittel 30 bis 60 Gew.% bezogen auf die eingesetzte Menge des Bestandteils (I) beträgt. Bei mehr als 60 Gew.% wird Netzwerkdichte unbefriedigender bzw. leidet der Glasübergangstemperatur T_{G}. Bei weniger als 30 Gew% an Codispersionsmittel gibt es Schwierigkeiten bei der Herstellung bzw. wenn ein Codispersionsmittel auf Basis von Epoxidharzen verwendet wird, wird die chemische Beständigkeit verschlechtert.

Als weiteren Bestandteil enthält die erfindungsgemäße Harzdispersion ein Tensid, das im herkömmlichen Sinne eine Substanz ist, die auf die Oberflächenspannung der Grenzfläche zwischen zwei Phasen einwirkt.
Es können sowohl kationische oder anionische Tenside (wie z.B. die Natriumsalze von Nonylphenolpolyglycolethersulfat, Octylphenolpolyglycolethersulfat, Fettalkoholpolyglycolethersulfat) als auch nicht ionische Tenside verwendet werden.

Bevorzugt ist, wenn das Tensid ein nicht ionisches Tensid ist.
Als besonders vorteilhaft in ihrer Wirkung haben sich nicht ionische Tenside wie Rizinusölethoxylat, ein hydriertes Rizinusölethoxylat, Alkylpheilolethoxylat, Fettalkoholethoxylat, Ölsäureethoxylat, Oxoalkoholethoxylat und/oder Fettalkoholalkoxylat erwiesen.

Die Menge an eingesetztem Tensid beträgt bevorzugt 3 bis 20 Gew.%, bevorzugt 3 bis 6 Gew.% bezogen auf die eingesetzte Menge des Bestandteils (I). Kleiner 3 Gew.% an Tensid zeigen keine ausreichende Wirkung und bei größer 20 Gew.% werden die Endeigenschaften des gehärteten Produkts verschlechtert.

Weiterhin kann die erfindungsgemäße Harzdispersion als weiteren Bestandteil zumindest einen Stabilisator - bevorzugt in einer Konzentration von 0,2 bis 2 Gew.% bezogen auf die Masse der Gesamtmischung - auf der Basis von hochmolekularen Alkoholen oder aber auch Cellulosederivaten, Stärke, Dextrin, Polyacrylsäure und/oder deren -copolymeren Salzen, Poly-N-vinylmethylacetamid, Polyvinylalkohol, Vinylpyrrolidon-Copolymerisate und/oder Stimme Schutzkolloide enthalten. Die Stabilität der Dispersion wird somit erhöht. Besonders bevorzugt ist wiederum wenn der Stabilisator Methoxycellulose ist, da dieser Stabilisator bereits bei geringsten Konzentrationen wirkt.

Auch kann die erfindungsgemäße Harzdispersion weitere Bestandteile wie Substanzen die die Härtungsreaktion beschleunigen wie z.B. Lewis-Säuren oder Imidzole in einer Menge von 0 bis 1,5 Gew% bezogen auf die Masse der gesamten Mischung enthalten. Von Vorteil sind wiederum Imidazole, die abgesehen von der beschleunigenden Wirkung auch noch eine hohe Stabilität der beschleunigten Dispersion von mehreren Stunden bis Tagen gewährleisten. Insbesondere wenn als Codispersionsmittel ein Harz auf Basis von Epoxidharzen verwendet wird, wird bevorzugt ein Imidazol zugegeben.

Weiterhin kann die erfindungsgemäße Harzdispersion Verarbeitungshilfsmittel in einer Konzentration bevorzugt von 0,05 bis 3 Gew.% bezogen auf die Masse der gesamten Mischung wie Verlaufsmittel zur Verbesserung der Filmbildung oder aber auch Substanzen zur Einstellung von speziellen Eigenschaften wie z. B. Acrylatdispersionen zur Erhöhung der Flexibilität enthalten. Beispielhaft sei die Verwendung von Ethylenglycol und/oder Polydimethylsiloxan genannt.

Die erfindungsgemäße Harzdispersion hat bevorzugt eine Feststoffkonzentration von 25-30 %.

Die Herstellung der erfindungsgemäßen Harzdispersion kann durch ein Verfahren erfolgen, bei dem zumindest das Codispersionmittel und das Tensid mit dem im wesentlichen in der Schmelze befindlichen Bestandteil (I) vermischt wird. Dabei ist es unerheblich in welcher Reihenfolge und mit welcher Temperatur das Codispersionsmittel und das Tensid zugegeben werden. Auch ist es möglich weitere Komponenten wie z.B. den Stabilisator und/oder Wasser sofort oder zeitlich versetzt beizufügen.

Bevorzugt ist ein Verfahren das zumindest folgende Schritte beinhaltet:
a. Zugabe zumindest des Codispersionsmittels zu dem im wesentlichen in der Schmelze befindlichen Bestandteil (I) und
b. Zugabe zumindest eines Tensides und Wasser oder einer Mischung aus zumindest einem Tensid und Wasser zu der im Schritt a) erhaltenen Mischung.

Das Harz auf der Basis von Benzoxazinen wird bei Temperaturen zwischen 50 und 130 °C aufgeschmolzen und das Codispersionsmittel zugegeben. Um die Viskosität dieser Mischung zu beeinflussen, kann gegebenenfalls zusätzlich ein Lösungsmittel (z.B. bis zu 10 Gew.%) zu dieser Mischung gegeben werden. Als Lösungsmittel kann z.B. Toluol eingesetzt werden. Dieser Mischung wird das Tensid in Kombination oder zeitlich versetzt mit Wasser beigefügt. Bevorzugt kann der Mischung zu diesem Zeitpunkt der Stabilisator allein oder in Kombination mit Wasser zugegeben werden. Die Temperaturen der zugegebenen Bestandteile können variieren und z. B. entsprechend ihrer Löslichkeiten aufeinander abgestimmt werden

Erhalten wird eine Harzdispersion in die gegebenenfalls weitere Komponenten wie Katalysatoren, Filmbildner, Pigmente oder aber auch Flexibilisatoren eingemischt werden können. Es ist aber auch möglich gegebenenfalls ein oder mehrere Komponenten bereits in den Verfahrensschritten a) bzw. b) zuzugeben.

Die unvernetzt erfindungsgemäße Harzdispersion kann auf textilen, mineralischen, metallischen oder aber auch Kunststoffoberflächen in Form von Fasern, Vliesen, Geweben, Wollen oder glatten Oberflächen einfach und unkompliziert z. B durch Streichen, Sprühen oder Rakeln aufgebracht werden. Es können sich Trocknungsprozesse anschließen. Während und auch nach der Vernetzung wird kein Formaldehyd frei, was umwelt- bzw. geruchsbelästigend wäre. Die Oberflächenbeschichtung ist flammenwidriger im Vergleich zu Beschichtungen aus Acrylatdispersionen. Weiterhin weisen die Beschichtungen eine hohe chemische und thermische Beständigkeit und einen höheren T_{G} auf.

Anhand eines Ausführungsbeispiels soll die Erfindung näher erläutert werden:

200 g eines Reaktionsproduktes aus Bisphenol A, Anilin und Formaldehyd (BisphenolA-Benzoxazinharzes) werden mit 100 g eines niedermolekularen EP-Harzes (z.B. Epicote® 828) und 30 g eines hydrierten Rizinusöleethoxylates bei 100 °C geschmolzen. Zu der Schmelze wird unter kräftigem Rühren 400 ml eine 1 %-ige Lösung aus Methoxycellulose innerhalb von 30 min zugesetzt. Es entsteht eine weiße Dispersion, die nach dem Abkühlen auf 25 °C für mindestens 2 Monate stabil ist.

Die so gewonnene Dispersion wird mit 1 Gew.% 2-Methylimidazol zur Beschleunigung versetzt und innerhalb 24 h verarbeitet. Zur weiteren Charakterisierung wird ein 200 µm dicker Film der beschleunigten Dispersion auf eine Glasplatte aufgebracht, für 15 min bei 120 °C getrocknet und für weitere 30 min bei 150 °C gehärtet. Der gehärtete Film ist transparent und zeigt gegenüber Angriffen von Wasser, Ethanol und Toluol keine messbare und gegenüber Aceton eine leichte Reaktion.

Im Vergleich zu Acrylatdispersionen konnte der T_{G}- Wert von den erfindungsgemäßen Harzdispersionen erhöht werden. So besitzt eine Acrylatdispersion (mit 10% Melaminharz gehärtet) einen T_{G}- Wert von 40°C und eine Acrylatdispersion (über Carboxylgruppen gehärtet) einen T_{G}- Wert von 60°C. Die erfindungsgemäßen Harzdispersionen auf der Basis von Benzoxazinen (unabhängig vom verwendeten Codispersionsmittel) einen T_{G}- Wert von 100 °C.

## Patentansprüche

1. Wässrige Harzdispersion zumindest die Bestandteile (I) - (IV) enthaltend-
(I) 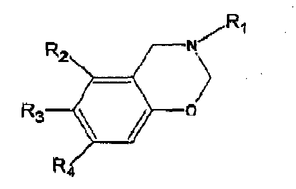 wobei
R₁ :
unsubstituierter ein- oder mehrkemiger aromatischer Rest oder mit Aminogruppen und/oder Cyanogruppen und/oder Nitrilgruppen und/oder mit gesättigten und/oder ungesättigten aliphatischen C₂ bis C₁₂ -Kohlenstoffketten substituierter ein- oder mehrkerniger aromatischer Rest
R₂, R₃ und R₄: Wasserstoff, Alkylreste mit bis zu 15 C-Atomen oder aromatischer Rest,
wobei R₂, R₃ und R₄ gleich oder verschieden von einander sein können.
(II) ein Codispersionsmittel auf der Basis von Epoxidharzen und/oder Novolakharzen
und
(III) ein nichtionisches Tensid ausgewählt aus Rizinusöehoxylat, hydriertem Rizinusölethoxylat, Alkylphenolethoxylat, Ölsäureethoxylat, Oxoalkoholethoxylat und/oder Fettalkoholalkoxylat
und
(IV)einen Stabilisator auf der Basis von Cellulosederivaten, Stärke, Dextrin, Polyacrylsäure und/oder deren -copolymere Salze, Poly-N-vinylmethylacetamid, Polyvinyfalkohol und/oder Vinylpyrrolidon-Copolymerisate.

2. Harzdispersion nach Anspruch 1, **dadurch gekennzeichnet, dass** R₁ des Bestandteils (I) ein unsubstituierter Phenylrest ist.

3. Harzdispersion nach zumindest einem der vorhergehenden Ansprüche, **dadurch gekennzeichnet, dass** R₂, R₃ und R₄ des Bestandteils (I) Alkylreste mit 8 bis 15 C-Atomen sind.

4. Harzdispersion nach zumindest einem der vorhergehenden Ansprüche, **dadurch gekennzeichnet, dass** der Bestandteil (I) ein Reaktionsprodukt aus Bisphenol A, Anilin und Formaldehyd ist.

5. Harzdispersion nach zumindest einem der vorhergehenden Ansprüche, **dadurch gekennzeichnet, dass** das Codispersionsmittel ein niedermolekularen Epoxidharz mit einer mittleren Molmasse von 200 bis 1000 ist.

6. Harzdispersion nach zumindest einem der vorhergehenden Ansprüche, **dadurch gekennzeichnet, dass** das Novolakharz ein Phenol-Formaldehydharz ist, bei dessen Herstellung das Verhältnis von Phenol : Formaldehyd von 1 : 0,4 bis 1: 0,8 beträgt.

7. Harzdispersion nach zumindest einem der vorhergehenden Ansprüche, **dadurch gekennzeichnet, dass** die Menge an Codispersionsmittel 30 bis 60 Gew. % bezogen auf die eingesetzte Menge des Bestandteils (I) beträgt.

8. Harzdispersion nach zumindest einem der vorhergehenden Ansprüche, **dadurch gekennzeichnet, dass** die Menge an nichtionischen Tensid 3 bis 20 Gew.% bezogen auf die eingesetzte Menge des Bestandteils (I) beträgt.

9. Harzdispersion nach zumindest einem der vorhergehenden Ansprüche, **dadurch gekennzeichnet, dass** der Stabilisator Methoxycellulose ist.

10. Verfahren zur Herstellung einer wässrigen Harzdispersion nach zumindest einem der vorhergehenden Ansprüche, **dadurch gekennzeichnet, dass** zumindest das Codispersionsmittel und das nichtionische Tensid mit dem bei Temperaturen zwischen 50 und 130 °C aufgeschmolzenen Bestandteil (I) vermischt wird.

11. Verfahren zur Herstellung einer wässrigen Warzdispersion nach Anspruch 10, folgende Schritte enthaltend:
a) Zugabe zumindest des Codispersionsmittel zu dem bei Temperaturen zwischen 50 und 130 °C aufgeschmolzenen Bestandteils (I) und
b) Zugabe zumindest eines nichtionischen Tensides und Wasser oder einer Mischung aus zumindest einem nichtionischen Tensid und Wasser zu der im Schritt a) erhaltenen Mischung.

12. Verfahren nach Anspruch 11, **dadurch gekennzeichnet, dass** im Schritt b) der Stabilisator zugegeben wird.

13. Verwendung der wässrigen Haradispersion nach zumindest einem der Ansprüche 1 bis 9 zur Herstellung von urivemetzten oder vernetzten Oberflächenbeschichtungen.

## Claims

1. Aqueous resin dispersion comprising at least the constituents (I) - (IV):
(I) 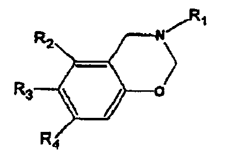 where
R₁:
a mono- or polynuclear aromatic radical unsubstituted or substituted with amino groups and/or cyano groups and/or nitrile groups and/or with saturated and/or unsaturated aliphatic C₂ to C₁₂ carbon chains
R₂, R₃ and R₄: hydrogen, alkyl radicals having up to 15 carbon atoms or an aromatic radical, wherein R₂, R₃ and R₄ may be the same or different from one another,
(II) a codispersant based on epoxy resins and/or novolak resins
and
(III) a nonionic surfactant selected from castor oil ethoxylate, hydrogenated castor oil ethoxylate, alkylphenol ethoxylate, oleic acid ethoxylate, oxo process alcohol ethoxylate and/or fatty alcohol alkoxylate
and
(IV) a stabilizer based on cellulose derivatives starch, dextrin, polyacrylic acid and/or copolymeric salts thereof, poly-N-vinylmethylacetamide, polyvinyl alcohol and/or vinylpyrrolidone copolymers.

2. Resin dispersion according to Claim 1, **characterized in that** R₁ of said constituent (I) is an unsubstituted phenyl radical.

3. Resin dispersion according to at least one of the preceding claims, **characterized in that** R₂, R₃ and R₄ of said constituent (I) are alkyl radicals having 8 to 15 carbon atoms.

4. Resin dispersion according to at least one of the preceding claims, **characterized in that** said constituent (I) is a reaction product of bisphenol A, aniline and formaldehyde.

5. Resin dispersion according to at least one of the preceding claims, **characterized in that** the codispersant is a low molecular weight epoxy resin having an average molar mass of 200 to 1000.

6. Resin dispersion according to at least one of the preceding claims, **characterized in that** the novolak resin is a phenol-formaldehyde resin prepared using a phenol:formaldehyde ratio in the range from 1:0.4 to 1:0.8.

7. Resin dispersion according to at least one of the preceding claims, **characterized in that** the amount of codispersant is in the range from 30% to 60% by weight, based on the amount of said constituent (I) used.

8. Resin dispersion according to at least one of the preceding claims, **characterized in that** the amount of nonionic surfactant is in the range from 3% to 20% by weight based on the amount of said constituent (I) used.

9. Resin dispersion according to at least one of the preceding claims, **characterized in that** the stabilizer is methoxy cellulose.

10. Process for producing an aqueous resin dispersion according to at least one of the preceding claims, **characterized in that** at least the codispersant and the nonionic surfactant is mixed with said constituent (I) molten at temperatures between 50 and 130°C.

11. Process for producing an aqueous resin dispersion according to Claim 10, comprising the following steps:
a) adding at least the codispersant to said constituent (I) molten at temperatures between 50 and 130°C, and
b) adding at least a nonionic surfactant and water or a mixture of at least a nonionic surfactant and water to the mixture obtained in step a).

12. Process according to Claim 11, **characterized in that** the stabilizer is added in step b).

13. Use of the aqueous resin dispersion according to at least one of Claims 1 to 9 for producing crosslinked or uncrosslinked surface coatings.

## Revendications

1. Dispersion aqueuse de résine, contenant au moins les constituants (I) - (IV) : 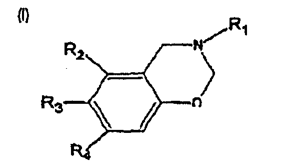 où
R₁ : représente un radical aromatique, à un ou plusieurs noyaux, non substitué ou un radical aromatique à un ou plusieurs noyaux substitué par des groupes amino et/ou des groupes cyano et/ou des groupes nitrile et/ou par des chaînes carbonées en C₂ à C₁₂ aliphatiques, saturées et/ou non saturées
R₂, R₃ et R₄ : représentent hydrogène, des radicaux alkyle comprenant jusqu'à 15 atomes de carbone ou un radical aromatique, où R₂, R₃ et R₄ peuvent être identiques ou différents les uns des autres,
(II) un codispersant à base de résines époxyde et/ou de résines novolaque et
(III) un agent tensioactif non ionique choisi parmi l'éthoxylate d'huile de ricin, l'éthoxylate d'huile de ricin hydrogénée, l'éthoxylate d'alkylphénols, l'éthoxylate d'acide oléique, l'éthoxylate d'oxoalcools et/ou l'alcoxylate d'alcools gras et
(IV) un stabilisateur à base de dérivés de cellulose, d'amidon, de dextrine, de poly(acide acrylique) et/ou de ses sels copolymères, de poly-N-vinylméthylacétamide, de poly(alcool vinylique) et/ou de copolymères de vinylpyrrolidone.

2. Dispersion de résine selon la revendication 1, **caractérisée en ce que** R₁ du constituant (I) représente un radical phényle non substitué.

3. Dispersion de résine selon au moins l'une quelconque des revendications précédentes, **caractérisée en ce que** R₂, R₃ et R₄ du constituant (I) représentent des radicaux alkyle comprenant 8 à 15 atomes de carbone.

4. Dispersion de résine selon au moins l'une quelconque des revendications précédentes, **caractérisée en ce que** le constituant (I) représente un produit de réaction de Bisphénol A, d'aniline et de formaldéhyde.

5. Dispersion de résine selon au moins l'une quelconque des revendications précédentes, **caractérisée en ce que** le codispersant représente une résine époxyde de bas poids moléculaire présentant une masse molaire moyenne de 200 à 1000.

6. Dispersion de résine selon au moins l'une quelconque des revendications précédentes, **caractérisée en ce que** la résine novolaque est une résine de phénolformaldéhyde, lors de la préparation de laquelle le rapport phénol:formaldéhyde est de 1:0,4 à 1:0,8.

7. Dispersion de résine selon au moins l'une quelconque des revendications précédentes, **caractérisée en ce que** la quantité de codispersant est de 30 à 60% en poids par rapport à la quantité utilisée de constituant (I).

8. Dispersion de résine selon au moins l'une quelconque des revendications précédentes, **caractérisée en ce que** la quantité d'agent tensioactif non ionique est de 3 à 20% en poids par rapport à la quantité utilisée de constituant (I).

9. Dispersion de résine selon au moins l'une quelconque des revendications précédentes, **caractérisée en ce que** le stabilisateur est la méthoxycellulose.

10. Procédé pour la préparation d'une dispersion aqueuse de résine selon au moins l'une quelconque des revendications précédentes, **caractérisé en ce qu'**au moins le codispersant et l'agent tensioactif non ionique sont mélangés au constituant (I) fondu à des températures entre 50 et 130°C.

11. Procédé pour la préparation d'une dispersion aqueuse de résine selon la revendication 10, comprenant les étapes suivantes :
a) l'addition au moins du codispersant au constituant (I) fondu à des températures entre 50 et 130°C et
b) l'addition au moins d'un agent tensioactif non ionique et d'eau ou d'un mélange d'au moins un agent tensioactif non ionique et d'eau au mélange obtenu dans l'étape a).

12. Procédé selon la revendication 11, **caractérisé en ce que** le stabilisateur est ajouté dans l'étape b).

13. Utilisation de la dispersion aqueuse de résine selon au moins l'une quelconque des revendications 1 à 9 pour la préparation de revêtements de surface non réticulés ou réticulés.
